Europäisches Patentamt

**(19)** European Patent Office

Office européen des brevets

**(11)** Publication number : **0 421 670 B1**

**(12)** EUROPEAN PATENT SPECIFICATION

**(45)** Date of publication of patent specification :
**02.02.94 Bulletin 94/05**

**(51)** Int. Cl.$^5$ : **A23G 3/30**

**(21)** Application number : **90310583.1**

**(22)** Date of filing : **27.09.90**

**(54) Non-tack chewing gum base.**

**(30)** Priority : **04.10.89 US 417165**

**(43)** Date of publication of application :
**10.04.91 Bulletin 91/15**

**(45)** Publication of the grant of the patent :
**02.02.94 Bulletin 94/05**

**(84)** Designated Contracting States :
**AT DE DK ES FR GB IT NL**

**(56)** References cited :
EP-A- 0 067 665
EP-A- 0 134 120
EP-A- 0 271 445
US-A- 4 352 822
WPI, FILE SUPPLIER, AN=80-21191C, Derwent
Publications Ltd, London, GB; & JP-A-55 019
014 (LOTTE K.K.) 09-02-1980

**(73)** Proprietor : **WM. WRIGLEY JR. COMPANY**
**410 North Michigan Avenue**
**Chicago Illinois 60611 (US)**

**(72)** Inventor : **Chuu, Michael S.**
**1712 Shawnee Trail**
**Northbrook, Illinois 60062 (US)**
Inventor : **Chapdelaine, Albert H.**
**1593 Marquette Avenue**
**Naperville, Illinois 60565 (US)**
Inventor : **Patel, Mansukh M.**
**3257 Venard Road**
**Downers Grove, Illinois 60515 (US)**

**(74)** Representative : **Allard, Susan Joyce et al**
**BOULT, WADE & TENNANT 27 Furnival Street**
**London EC4A 1PQ (GB)**

## Description

The present disclosure is directed to a novel chewing gum formulation which exhibits non-tack characteristics while retaining texture and flavor character. In the past, chewing gums having non-tack characteristics have generated much interest. The demand for chewing gum compositions which do not adhere to natural teeth, dentures, fillings, or the like is certainly understandable.

Various approaches have been undertaken to address the tackiness problem often manifested by conventional chewing gums. These approaches often involve the modification of well known gum base formulations, either by the deletion of certain ingredients or by the inclusion of additional ingredients. For background information with respect to these prior art non-tack gum compositions, see U.S. Patent Nos. 4,518,615, 4,415,593 and US-A-4352 822.

Unfortunately, the prior art approaches to reduce tackiness, although successful to some degree, often present new problems. For example, the prior art approaches to reducing tackiness can involve expensive modifications to the chewing gum manufacturing process. Additionally, the prior art non-tack chewing gums suffer from inferior texture quality and flavor character.

It would therefore be desirable to develop a non-tack chewing gum base composition which also maintains its texture quality, as well as its flavor character. Additionally, it would be desirable that such a non-tack chewing gum with improved texture quality and flavor character could be manufactured according to a manufacturing method that is not dependent on expensive or critical manufacturing parameters.

It has been unexpectedly discovered that when a low melting wax is employed in a terpene resin containing chewing gum base, the chewing gum manifests superior non-tack properties while maintaining its texture quality and flavor character. In accordance with the present invention, there is provided a chewing gum base and a method of manufacturing the same comprising terpene resins and a low melting point wax. When the chewing gum base of the present invention is employed in a chewing gum the chewing gum manifests non-tack characteristics while maintaining its texture quality and flavor character. Additionally, the chewing gum base of the present invention can be manufactured pursuant to manufacturing methods well known in the art, and, thus, there is no need to make expensive modifications, or to follow critical parameters, in the manufacture of the chewing gum base of the present invention.

The chewing gum base of the present invention comprises terpene resin in an amount from 0.1% to 20% by weight of the gum base. The terpene resin will have a softening point between 85°C to 135°C. The gum base will further comprise one or more high melting waxes in an amount from 0.1% to 10% by weight of the gum base wherein the high melting wax has a melting point of 70°C or greater. According to the invention, the combined amount of terpene resin and high melting wax present in the gum base will be from 0.1% to 20% by weight of the gum base wherein the ratio of terpene resin to high melting wax will be between 3:1 to 1:3 by weight. Additionally, the chewing gum base of the present invention will have a low melting wax present in an amount from 0.1% to 4% by weight of the gum base wherein the low melting wax has a melting point of 50°C or less. The gum base will further have elastomers present in an amount from 10% to 30% by weight of the gum base. The gum base will also contain polyvinyl acetate in an amount from 15% to 30% by weight wherein the polyvinyl acetate has a molecular weight of 8,000 to 60,000. Also, the chewing gum base will have emulsifiers present in an amount from 1% to 10% by weight. Fillers will also be present in an amount from 5% to 20% by weight of the gum base. Finally, the chewing gum base of the present invention will have a gum base solvent present in an amount from 15% to 40% by weight of the gum base.

In general, a chewing gum composition comprises a water-soluble bulk portion, a water-insoluble chewable gum base portion, and, typically, water-insoluble flavors. The water-soluble bulk portion dissipates with the portion of the flavor over a period of time during chewing. The gum base portion is retained in the mouth throughout the chew. The present invention is directed to the base portion of the chewing gum.

In accordance with the present invention, a non-tack chewing gum having improved texture quality and flavor character over prior art non-tack chewing gums has been discovered. Specifically, a new and improved non-tack chewing gum base has been discovered. The chewing gum base of the present invention comprises: terpene resins; one or more high melting waxes; a low melting wax; one or more fillers; one or more elastomers; one or more emulsifiers; low molecular weight polyvinyl acetate, and a solvent for the chewing gum base.

The first important ingredient of the chewing gum base of the present invention is terpene resins. For a discussion of terpene resins and their use in chewing gum see "USE OF TERPENE RESINS AS BASIC CHEWING GUM COMPONENTS" by Y. Sato and Y. Suzuki in SHOKU NO KAGAKU, Vol. 93, 1985. Terpene resins contemplated by the chewing gum base of the present invention have high softening points. The terpene resins contemplated by the present invention will have softening points of 85°C to 135°C, and preferably of 85°C to 125°C. Terpene resins with lower softening points will yield a chewing gum base that is too soft and, thus, less desirable. Conversely, terpene resins with higher-softening points will yield a chewing gum base that is tougher thereby requiring additional plasticizers such as waxes, fats, oils, and emulsifiers. The preferred terpene resins contemplated by the chewing gum base of the present invention include polyterpene resins available from Hercules, Inc.; Reichold Co.; and Arizona Chemical, a division of Kraft. The terpene resins contemplated by the present invention will be present in amounts by weight of the chewing gum base composition from 0.1% to 20%, and preferably, from 5% to 15% by weight.

High melting waxes contemplated by the present invention include: candelilla wax, paraffin wax, carnauba wax, microcrystalline wax. The preferred wax contemplated by chewing gum base of the present invention is microcrystalline wax. By high melting waxes it is meant waxes with a melting point of 70°C or greater. The high melting waxes will be present in an amount from 0.1% to 10% by weight of the chewing gum base composition. Preferably, the waxes will comprise from 4% to 8% by weight of the chewing gum base composition.

According to the invention, the combined amount of terpene resin and high melting wax present in the chewing gum base of the present invention is from 0.1% to 20% by weight of the chewing gum base composition, wherein the ratio of terpene resin to high melting wax is from 3:1 to 1:3 by weight. Preferably, the total amount of terpene resin and high melting wax present in the chewing gum base of the present invention is from 4% to 20% by weight of the chewing gum base composition, wherein the ratio of terpene resin to high melting wax is from 3:1 to 1:1 by weight.

In addition to high melting wax, the chewing gum base of the present invention contemplates the use of low melting wax. The use of low melting wax serves to soften the texture; increase the liveliness of the chew, as well as to maintain the gum's cohesiveness; maintains the soft initial chew of the gum throughout its shelf-life; and extends the gum's flavor and sweetness. Without being restricted by theory, it is believed that the low melting wax prevents the gum base ingredients, as for example, the high melting wax, from crystallizing, thereby allowing for a more amorphous gum, which may account for the chewing gum's superior texture quality and flavor character over the non-tack chewing gum compositions presently known in the art.

The low melting point waxes contemplated by the present invention include waxes with a melting point of 50°C or less. The preferred low melting wax contemplated by the chewing gum base of the present invention is a paraffin wax with a melting point of about 46°C available from Boler Petroleum Co. under the name "1397 wax". The low melting wax will comprise from 0.1% to 4% by weight of the chewing gum base composition. Preferably, the low melting wax of the present invention will comprise from 0.1% to 2% by weight of the chewing gum base composition.

The elastomers contemplated by the chewing gum base of the present invention include synthetic gums or synthetic elastomers. Illustrative synthetic elastomers are butadiene-styrene copolymers, polyisobutylene, and isobutylene-isoprene copolymer. Preferably, polyisobutylene, isobutylene-isoprene copolymer, or mixtures thereof are employed. Most preferably, the elastomer utilized in the chewing gum base of the present invention comprises a mixture of isobutylene-isoprene copolymer and polyisobutylene wherein the ratio of isobutylene-isoprene copolymer to polyisobutylene is from 3:1 to 1:3 by weight.

The elastomer is employed in an amount from 10% to 30% by weight of the chewing gum base. Preferably, the elastomer will be present in an amount from 15% to 25% by weight of the chewing gum base composition.

The chewing gum base of the present invention also contemplates the weight polyvinyl acetate as a plasticizer. The low molecular weight polyvinyl acetate contemplated by the chewing gum base of the present invention will have a molecular weight of 8,000 to 60,000. The polyvinyl acetate will be present in an amount from 15% to 30% by weight of the chewing gum base. Preferably, the polyvinyl acetate will be present in the chewing gum base from 20% to 25% by weight of the chewing gum base.

Emulsifiers contemplated by the present invention include glycerol monostearate, lecithin, fatty acid monoglycerides, diglycerides, triglycerides, and the like, as well as mixtures thereof. Glycerol monostearate is preferred however. The emulsifiers will be present in an amount from 1% to 10% by weight of the chewing gum base composition. Preferably, the emulsifiers will comprise from 2% to 8% by weight of the chewing gum base.

The fillers contemplated by the chewing gum base of the present invention include calcium carbonate, magnesium carbonate, talc, tricalcium phosphate, and the like, as well as mixtures thereof. Preferably, the present invention contemplates the use of calcium carbonate as the filler. The filler will comprise from 5% to 20% by weight of the chewing gum base composition. Preferably, the filler will be present in an amount from 10% to 15% of the chewing gum base composition.

The chewing gum base of the present invention also contemplates the use of a chewing gum base solvent. Illustrative of solvents typically employed in chewing gum bases are: partially hydrogenated vegetable oil; partially hydrogenated soy bean oil; glycerol monostearate; hydrogenated cottonseed oil; and mixtures thereof. Preferably, the solvent contemplated by the chewing gum base of the present invention is a mixture of hydrogenated oils and glycerol monostearate wherein the ratio of hydrogenated oils to glycerol monostearate is 40:1 to 2:1 by weight. The chewing gum base solvent will comprise from 15% to 40% by weight of the chewing gum base, and preferably, the chewing gum base solvent will comprise from 20% to 30% by weight of the chewing gum base composition.

Optionally, the gum base of the present invention may contain antioxidants in an amount from 0.01% to 0.1% by weight of the chewing gum base composition. Common antioxidants include Butylhydroxide Anisole (BHA) and Butylhydroxide Toluene (BHT). In a preferred embodiment of the present invention, the chewing gum base will contain BHA.

As previously pointed out, a chewing gum composition generally comprises a water-soluble bulk portion, a water-insoluble chewable gum base portion, and, typically, water-insoluble flavors. The water-soluble bulk portion dissipates with the portion of the flavor over a period of time during chewing. The gum base portion is retained in the mouth throughout the chew.

The manner in which the base ingredients of the present invention are blended is not critical and is performed using standard techniques and equipment known to those skilled in the art. Typically, a portion of the terpene resin and a portion of filler will be mixed with the elastomers in a Sigma blade mixer at a temperature of 105°C to 115°C for about 2-3 hours, thereby yielding a homogenous mixture of the aforesaid. Once the previously described mixing has taken place, the remaining base ingredients may be added in bulk, incrementally or stepwise, while the resulting mixture is mixed until homogenous.

A wide variety of different types of manufacturing methods and apparatii are well known to those skilled in the art, and the instant invention is not intended to be limited to a specific mixer, or a specific mixing temperature, or a specific length of mixing time. These features are well known to those skilled in the art.

The insoluble gum base comprises between 5% to 95% of the gum. Preferably, the insoluble gum base comprises 10% to 50% of the gum composition by weight, and most preferably, 20% to 30% by weight of the gum.

The water soluble portion of the chewing gum may comprise softeners, sweeteners and combinations thereof. The softeners are added to the chewing gum in order to optimize chewability and mouth feel of the gum. Softeners, also known in the art as plasticizers or plasticizing agents, generally constitute between 0.5% to 15% by weight of the chewing gum. Softeners may include glycerine, lecithin and combinations thereof. Further, aqueous sweetener solutions such as those containing sorbitol, hydrogenated starch hydrolysates, corn syrup and combinations thereof may be used as softeners and binding agents in the gum.

Chewing gum may also contain sweeteners. Such sweeteners are also contemplated by the present invention for addition to the chewing gum. The sweeteners include both sugar and sugarless components. Sugar sweeteners generally include saccharide containing components commonly known in the chewing gum art which comprise, sucrose, dextrose, maltose, dextrin, dried invert sugar, fructose, levulose, galactose, corn syrup solids alone or in any combination. Sugarless sweeteners include components with sweetening characteristics but which are devoid of the commonly known sugars and comprise, but are not limited to, sugar alcohols such as sorbitol, mannitol, xylitol, hydrogenated starch hydrolysates, maltitol alone or in any combination. Also contemplated for addition to the chewing gum are high intensity sweeteners such as aspartame, sucralose, acesulfame-K, and saccharin.

Those skilled in the art will recognize any combination of sugar and/or sugarless sweeteners may be incorporated into the chewing gum formula. Further, those skilled in the art will recognize that a sweetener may be present in a chewing gum in whole or in part as a water soluble bulking agent. In addition, the softener may be combined with a sweetener such as an aqueous sweetener solution.

A flavor may be present in a chewing gum in an amount from 0.1% to 10% by weight, and preferably from 0.5% to 3% by weight of the gum. Flavors contemplated by the present invention include any food acceptable liquid flavoring. The flavor may comprise essential oils, synthetic flavors, or mixtures thereof, including but not limited to, oils derived from plants and fruits such as citrus oils, fruit essences, peppermint oil, spearmint oil, clove oil, oil of wintergreen, anise, and the like. Artificial flavoring components are also contemplated by the present invention. Those skilled in the art will recognize that natural and artificial flavors may be combined in any manner. All such flavors and blends are contemplated by the present invention.

Additional ingredients such as colors and pharmaceutical agents may be added to the chewing gum.

In general, chewing gum is manufactured by sequentially adding the various chewing gum ingredients to any commercially available mixer known in the art. After the ingredients have been thoroughly mixed, the gum mix is discharged from the mixer and shaped to the desired form such as by rolling into sheets and cutting into sticks, extruding into chunks, or casting into pellets.

Generally, the ingredients are mixed by first melting the gum base and adding it to the running mixer. The base may also be melted in the mixer itself. Color may also be added at this time. A softener such as glycerine may then be added next along with syrup and a portion of bulking agent. Further portions of the bulking agents may be added to the mixer.

The entire mixing procedure typically takes from 5 to 15 minutes, but longer mixing times may sometimes be required. Those skilled in the art will recognize that variations to the above-described procedure may be employed. It should be understood that an equivalent of changes and modifications of the embodiments described above are also contemplated by the present invention.

The following examples are not to be construed as limitations upon the present invention, but are included merely as illustration of the various embodiments.

Three gum bases were made according to the following compositions:

**TABLE I**

| COMPONENT | GUM BASE 1 | GUM BASE 2 | GUM BASE 3 |
|---|---|---|---|
| Microcrystalline Wax ($82\frac{1}{2}$C melting point) | 6.1 | 9.8% | --- |
| Paraffin Wax ($82^{\circ}$C melting point) | --- | 2.0% | --- |
| BHA | 0.04% | --- | 0.04% |
| Terpene Resin ($125^{\circ}$C softening point) | 13.66% | --- | --- |
| Natural Gums | --- | 18.5% | --- |
| Resin Esters | --- | 17.0% | --- |
| Paraffin Wax ($46\frac{1}{2}$C melting point) | 0.2 % | --- | --- |
| Hydrogenated Cottonseed Oil | 10.1 % | 3.2% | 13.3 % |
| Hydrogenated Soybean Oil | 6.8 % | 2.4% | 13.3 % |
| Hydrogenated Vegetable Oil | 1.9 % | 0.6% | 9.86% |
| Glycerol monostearate | 5.6 % | 5.4 % | 2.7 % |
| Low molecular weight polyvinyl acetate | 24.7 % | 15.7 % | 21.7 % |
| $CaCO_3$ | 10.7 % | 16.2 % | 13.3 % |
| Polyisobutylene | 10.1 % | 3.0 % | 15.9 % |
| Isoprene-Isobutylene Copolymer | 10.1 % | 6.2 % | 9.9 % |
| | 100% | 100% | 100% |

Gum base formulation number 1 above is the low melting wax/terpene resin containing non-tack gum base of the present invention. Gum base formulation number 2 above is a standard gum base formulation known in the prior art. Similarly, gum base formulation number 3 above is a non-tack gum base formulation known in the prior art.

5

## EXAMPLE 1

The gum base composition of TABLE I were used to make the following spearmint flavored chewing gum compositions according to the following formulations:

### TABLE II

| COMPONENT | R | M | 3L |
|---|---|---|---|
| Gum Base 1 (see Table I) | 19.2 % | --- | --- |
| Gum Base 2 (see Table I) | --- | --- | 20.7% |
| Gum Base 3 (see Table I) | --- | 19.8% | --- |
| Sorbitol | 0.7 % | 0.7% | --- |
| Corn Syrup | 14.8 % | 17.4% | 16.9% |
| Glycerin | 1.3 % | 0.7% | 0.9% |
| Spearmint Flavor | 1.1 % | 0.6% | 0.6% |
| Sugar | 62.7 % | 60.8% | 59.4% |
| Lecithin | 0.15% | --- | --- |
| Color | 0.05% | --- | --- |
| Dextrose Monohydrate | --- | --- | 1.5% |
| | 100% | 100% | 100% |

Spearmint chewing gum "R" above employs the low melting wax/terpene resin non-tack chewing gum base of the present invention (see TABLE I, number 1). Spearmint chewing gum "M" employs a non-tack gum base well known in the prior art (see TABLE I, number 3). Spearmint chewing gum "3L" employs a standard chewing gum base well known in the prior art (see TABLE I, number 2). Upon reviewing FIGURE I, comparing the above three spearmint chewing gum formulations with respect to tackiness over time, it can be observed that the low melting wax/terpene resin chewing gum base manifested non-tack characteristics equivalent to the non-tack chewing gum base known in the prior art. Additionally, however, when the low melting wax/terpene resin containing non-tack gum base of the present invention is employed in spearmint chewing gum, the gum manifests superior texture and flavor character over chewing gum containing the non-tack base known in the prior art.

## EXAMPLE 2

The gum base compositions of TABLE I were used to make the following peppermint flavored gum compositions according to the following formulations:

## TABLE III

| COMPONENT | J | L | 3K |
|---|---|---|---|
| Gum Base 1 (see Table I) | 19.3 % | --- | --- |
| Gum Base 2 (see Table I) | --- | --- | 20.2% |
| Gum Base 3 (see Table I) | --- | 20.2% | --- |
| Sorbitol | 0.9 % | 0.9% | --- |
| Corn Syrup | 14.8 % | 17.8% | 13.3% |
| Glycerin | 1.3 % | 0.7% | 1.3% |
| Sugar | 62.4 % | 59.7% | 54.4% |
| Peppermint Flavor | 1.15% | 0.7% | 0.9% |
| Lecithin | 0.15% | --- | --- |
| Dextrose Monohydrate | --- | --- | 9.9% |
| | 100% | 100% | 100% |

Peppermint chewing gum "J" above employs the low melting wax/terpene resin non-tack chewing gum base of the present invention (see TABLE I, number 1). Peppermint chewing gum "L" above employs a non-tack gum base well known in the prior art (see TABLE I, number 3). Peppermint chewing gum "3K" above employs a standard gum base known in the prior art (see TABLE I, number 2). Upon reviewing FIGURE II comparing the above three peppermint chewing gum formulations with respect to tackiness over time, it can be seen that the low melting wax/terpene resin chewing gum base containing gum manifested non-tack characteristics equivalent to the gum containing the non-tack gum base known in the prior art. Additionally, however, when the low melting wax/terpene resin containing non-tack gum base of the present invention is employed in peppermint chewing gum, the gum manifests superior texture and flavor character over peppermint chewing gum containing the non-tack base known in the prior art.

**EXAMPLE 3**

A gum base composition was made according to the following formula in TABLE IV below:

## TABLE IV

| COMPONENT | GUM BASE |
|---|---|
| Microcystalline Wax (82°C melting point) | 4.9% |
| Terpene Resin (85°C softening point) | 13.6% |
| Paraffin Wax (46°C melting point) | 1.3% |
| Hydrogenated cottonseed, soybean, and vegetable oils | 19.2% |
| Glycerol Monostearate | 3.8% |
| Low Molecular weight polyvinyl acetate | 24.7% |
| $CaCO_3$ | 11.0% |
| Lecithin | 1.3% |
| Polyisobutylene | 10.1% |
| Isoprene-Isobutylene Copolymer | 10.1% |
| | 100% |

The gum base composition of TABLE IV was used to make the peppermint gum composition of TABLE V below:

## TABLE V

| COMPONENT | |
|---|---|
| Base | 20.2% |
| Sugar | 58.5% |
| Corn Syrup | 18.8% |
| Sorbitol | 0.7% |
| Glycerin | 0.7% |
| Peppermint Flavor | 1.1% |
| | 100% |

In laboratory panel tests assessing the tackiness of the peppermint gum formulation of TABLE V, it was determined that this gum formulation was similar in non-tack properties to gum formulation "L" of TABLE III, which employs a non-tack gum base known in the prior art. However, when the low melting wax/terpene resin containing non-tack gum base of the present invention is employed in peppermint chewing gum, peppermint gum formulations containing the gum base of the present invention manifest texture and flavor quality superior to peppermint gums containing non-tack gum bases known in the prior art.

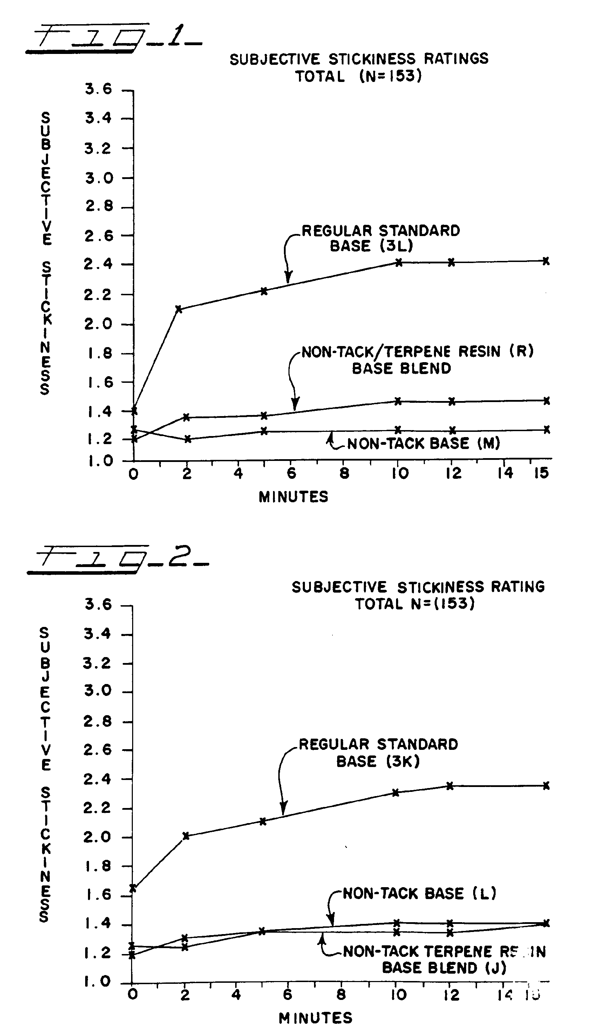

## Claims

1. A chewing gum base comprising:
   terpene resin in an amount from 0.1% to 20% by weight of the gum base wherein the terpene resin has a softening point of 85°C to 135°C;
   one or more high melting waxes in an amount from 0.1% to 10% by weight of the gum base wherein the high melting waxes have a melting point of 70°C or greater;
   wherein the combined amount of terpene resin and high melting wax present in the chewing gum base is from 0.1% to 20% by weight of the gum base and wherein the ratio of terpene resin to high melting wax is from 3:1 to 1:3 by weight;
   low melting wax in an amount from 0.1% to 4% by weight of the gum base wherein the low melting wax has a melting point of 50°C or less;
   one or more elastomers in an amount from 10% to 30% by weight of the gum base;
   low molecular weight polyvinyl acetate in an amount from 15% to 30% by weight of gum base wherein the polyvinyl acetate has a molecular weight of 8,000 to 60,000;
   one or more emulsifiers in an amount from 1% to 10% by weight of the gum base;
   one or more fillers in an amount from 5% to 20% by weight of the gum base; and
   one or more chewing gum base solvents in an amount from 15% to 40% by weight of the gum base.

2. A chewing gum base according to claim 1 comprising:
   terpene resin in an amount from 5% to 15% by weight of the gum base wherein the terpene resin has a softening point of 85°C to 125°C;
   one or more high melting waxes in an amount from 4% to 8% by weight of the gum base wherein the high melting waxes have a melting point of 70°C or greater;
   wherein the combined amount of terpene resin and high melting wax present in chewing gum base is from 4% to 20% by weight of the gum base and wherein the ratio of terpene resin to high melting wax is from 3:1 to 1:1 by weight;
   low melting wax in an amount from 0.1% to 2% by weight of the gum base wherein the low melting wax has a melting point of 50°C or less,
   one or more elastomers in an amount from 15% to 25% by weight of the gum base;
   low molecular weight polyvinyl acetate in an amount from 20% to 25% by weight of the gum base wherein the polyvinyl acetate has a molecular weight of 8,000 to 60,000;
   one or more emulsifiers in an amount from 2% to 8% by weight of the gum base;
   one or more fillers in an amount from 10% to 15% by weight of the gum base;
   one or more chewing gum base solvents in an amount from 20% to 30% by weight of the gum base.

3. A chewing gum composition as claimed in claim 1 or claim 2 characterised in that the low melting wax comprises a paraffin wax.

4. A chewing gum composition as claimed in any one of the preceding claims characterised in that the elastomer is selected from the group comprising butadiene-styrene copolymers; polyisobutylene; isobutylene-isoprene copolymer; and mixtures thereof.

5. A chewing gum composition as claimed in any one of the preceding claims characterised in that the elastomer comprises a mixture of isobutylene-isoprene copolymer and polyisobutylene wherein the ratio of the isoprene-isobutylene copolymer to polyisobutylene is from 3:1 to 1:3 by weight.

6. A chewing gum composition as claimed in any one of the preceding claims characterised in that the emulsifier comprises glycerol monostearate.

7. A chewing gum composition as claimed in any one of the preceding claims characterised in that the filler comprises calcium carbonate.

8. A chewing gum composition as claimed in any one of the preceding claims characterised in that the gum base solvent is selected from the group comprising: partially hydrogenated vegetable oil; partially hydro-

EP 0 421 670 B1

genated soybean oil; glycerol monostearates; hydrogenated cottonseed oil; and mixtures thereof.

9. A chewing gum composition as claimed in any one of the preceding claims characterised in that the gum base solvent comprises a mixture of hydrogenated oil and glycerol monostearate wherein the ratio of hydrogenated oil to glycerol monostearate is 40:1 to 2:1 by weight.

10. A method of manufacturing a non-tack chewing gum base comprising the following steps:
   providing a terpene resin with a softening point of 85°C to 135°C;
   providing one or more high melting waxes with a melting point of 70°C or greater;
   providing low melting wax with a melting point of 50°C or less,
   providing one or more elastomers;
   providing low molecular weight polyvinyl acetate with a molecular weight of 8,000 to 60,000;
   providing one or more emulsifiers;
   providing one or more fillers;
   providing one or more chewing gum base solvents; and
   mixing the aforesaid so that the resulting non-tack chewing gum base comprises from 0.1% to 20% by weight terpene resin; from 0.1% to 10% by weight high melting waxes; such that the total amount of terpene resin and high melting wax is from 0.1% to 20% by weight wherein the ratio of terpene resin to high melting wax is from 3:1 to 1:3 by weight; from 0.1% to 4% low melting wax by weight; from 10% to 30% by weight polyvinyl acetate; from 1% to 10% by weight emulsifier; from 5% to 20% by weight filler; and from 15% to 40% by weight chewing gum base solvents.

11. A method as claimed in claim 10 characterised in that the low melting wax comprises a paraffin wax.

12. A method as claimed in claim 10 or claim 11 characterised in that the elastomer is selected from the group comprising: butadiene-styrene copolymers; polyisobutylene; isobutylene-isoprene copolymer; and mixtures thereof.

13. A method as claimed in any one of claims 10 to 12 characterised in that the elastomer comprises a mixture of isobutylene-isoprene copolymer and polyisobutylene wherein the ratio of the isoprene-isobutylene copolymer to polyisobutylene is from 3:1 to 1:3 by weight.

14. A method as claimed in any one of claims 10 to 13 characterised in that the emulsifier comprises glycerol monostearate.

15. A method as claimed in any one of claims 10 to 14 characterised in that the filler comprises calcium carbonate.

16. A method as claimed in any one of claims 10 to 15 characterised in that the gum base solvent is selected from the group comprising: partially hydrogenated vegetable oil; partially hydrogenated soybean oil; glycerol monostearate; hydrogenated cottonseed oil; and mixtures thereof.

17. A method as claimed in any one of claims 10 to 16 characterised in that the gum base solvent comprises a mixture of hydrogenated oil and glycerol monostearate wherein the ratio of hydrogenated oil to glycerol monostearate is 40:1 to 2:1 by weight.

**Patentansprüche**

1. Kaugummigrundmasse, umfassend:
   Terpenharz in einer Menge von 0,1% bis 20% auf Basis des Gewichts der Gummigrundmasse, worin das Terpenharz einen Erweichungspunkt von 85°C bis 135°C besitzt;
   ein oder mehrere hochschmelzende Wachse in einer Menge von 0,1% bis 10% auf Basis des Gewichts der Gummigrundmasse, worin die hochschmelzenden Wachse einen Schmelzpunkt von 70°C oder mehr besitzen;
   worin die vereinigte Menge von Terpenharz und hochschmelzendem Wachs, die in der Kaugummigrundmasse vorhanden ist, von 0,1% bis 20% auf Basis des Gewichts der Gummigrundmasse ist und worin das Verhältnis von Terpenharz zu hochschmelzendem Wachs von 3:1 bis 1:3 auf Gewichtsbasis ist;
   niederschmelzendes Wachs in einer Menge von 0,1% bis 4% auf Basis des Gewichts der Gummigrund-

10

EP 0 421 670 B1

masse, worin das niederschmelzende Wachs einen Schmelzpunkt von 50°C oder weniger besitzt;
ein oder mehrere Elastomere in einer Menge von 10% bis 30% auf Basis des Gewichts der Gummigrundmasse;
niedermolekulares Polyvinylacetat in einer Menge von 15% bis 30% auf Basis des Gewichts der Gummigrundmasse,
worin das Polyvinylacetat ein Molekulargewicht von 8.000 bis 60.000 besitzt;
einen oder mehrere Emulgatoren in einer Menge von 1% bis 10% auf Basis des Gewichts der Gummigrundmasse;
einen oder mehrere Füllstoffe in einer Menge von 5% bis 20% auf Basis des Gewichts der Gummigrundmasse und
ein oder mehrere Kaugummigrundmasse-Lösungsmittel in einer Menge von 15% bis 40% auf Basis des Gewichts der Gummigrundmasse.

2. Kaugummigrundmasse nach Anspruch 1, umfassend:
Terpenharz in einer Menge von 5% bis 15% auf Basis des Gewichts der Gummigrundmasse, worin das Terpenharz einen Erweichungspunkt von 85°C bis 125°C besitzt;
ein oder mehrere hochschmelzende Wachse in einer Menge von 4% bis 8% auf Basis des Gewichts der Gummigrundmasse, worin die hochschmelzenden Wachse einen Schmelzpunkt von 70°C oder mehr besitzen;
worin die vereinigte Menge von Terpenharz und hochschmelzendem Wachs, die in der Kaugummigrundmasse vorhanden ist, von 4% bis 20% auf Basis des Gewichts der Gummigrundmasse ist und worin das Verhältnis von Terpenharz zu hochschmelzendem Wachs von 3:1 bis 1:1 auf Gewichtsbasis ist;
niederschmelzendes Wachs in einer Menge von 0,1% bis 2% auf Basis des Gewichts der Gummigrundmasse, worin das niederschmelzende Wachs einen Schmelzpunkt von 50°C oder weniger besitzt;
ein oder mehrere Elastomere in einer Menge von 15% bis 25% auf Basis des Gewichts der Gummigrundmasse;
niedermolekulares polyvinylacetat in einer Menge von 20% bis 25% auf Basis des Gewichts der Gummigrundmasse,
worin das polyvinylacetat ein Molekulargewicht von 8.000 bis 60.000 besitzt;
einen oder mehrere Emulgatoren in einer Menge von 2% bis 8% auf Basis des Gewichts der Gummigrundmasse;
einen oder mehrere Füllstoffe in einer Menge von 10% bis 15% auf Basis des Gewichts der Gummigrundmasse und
ein oder mehrere Kaugummigrundmasse-Lösungsmittel in einer Menge von 20% bis 30% auf Basis des Gewichts der Gummigrundmasse.

3. Kaugummi-Zusammensetzung nach Anspruch 1 oder 2, **dadurch gekennzeichnet,** daß das niederschmelzende Wachs ein Paraffinwachs umfaßt.

4. Kaugummi-Zusammensetzung nach einem der vorhergehenden Ansprüche, **dadurch gekennzeichnet,** daß das Elastomer aus der Gruppe, die Butadien-Styrol-Copolymere, Polyisobutylen, Isobutylen-Isopren-Copolymer und Gemische davon umfaßt, ausgewählt ist.

5. Kaugummi-Zusammensetzung nach einem der vorhergehenden Ansprüche, **dadurch gekennzeichnet,** daß das Elastomer ein Gemisch von Isobutylen-Isopren-Copolymer und Polyisobutylen enthält, worin das Verhältnis des Isopren-Isobutylen-Copolymers zu Polyisobutylen von 3:1 bis 1:3 auf Gewichtsbasis ist.

6. Kaugummi-Zusammensetzung nach einem der vorhergehenden Ansprüche, **dadurch gekennzeichnet,** daß der Emulgator Glycerinmonostearat umfaßt.

7. Kaugummi-Zusammensetzung nach einem der vorhergehenden Ansprüche, **dadurch gekennzeichnet,** daß der Füllstoff Calciumcarbonat umfaßt.

8. Kaugummi-Zusammensetzung nach einem der vorhergehenden Ansprüche, **dadurch gekennzeichnet,** daß das Gummigrundmasse-Lösungsmittel aus der Gruppe, die teilweise hydriertes Pflanzenöl, teilweise hydriertes Sojabohnenöl, Glycerinmonostearate, hydriertes Baumwollsamenöl und Gemische davon umfaßt, ausgewählt ist.

9. Kaugummi-Zusammensetzung nach einem der vorhergehenden Ansprüche, **dadurch gekennzeichnet,**

daß das Gummigrundmasse-Lösungsmittel ein Gemisch von hydriertem Öl und Glycerinmonostearat umfaßt, worin das Verhältnis von hydriertem Öl zu Glycerinmonostearat von 40:1 bis 2:1 auf Gewichtsbasis ist.

10. Verfahren zur Herstellung einer nicht-klebenden Kaugummigrundmasse, umfassend die folgenden Schritte:
Bereitstellen eines Terpenharzes mit einem Erweichungspunkt von 85°C bis 135°C;
Bereitstellen eines oder mehrerer hochschmelzender Wachse mit einem Schmelzpunkt von 70°C oder mehr;
Bereitstellen von niederschmelzendem Wachs mit einem Schmelzpunkt von 50°C oder weniger;
Bereitstellen von einem oder mehreren Elastomeren;
Bereitstellen von niedermolekularem Polyvinylacetat mit einem Molekulargewicht von 8.000 bis 60.000;
Bereitstellen von einem oder mehreren Emulgatoren;
Bereitstellen von einem oder mehreren Füllstoffen;
Bereitstellen von einem oder mehreren Kaugummigrundmasse-Lösungsmitteln und
Vermischen des obigen, so daß die resultierende nichtklebende Kaugummigrundmasse von 0,1 bis 20 Gew.-% Terpenharz; von 0,1 bis 10 Gew.-% hochschmelzende Wachse, so daß die Gesamtmenge an Terpenharz und hochschmelzendem Wachs von 0,1 bis 20 Gew.-% ist und das Verhältnis von Terpenharz zu hochschmelzendem Wachs von 3:1 bis 1:3 auf Gewichtsbasis ist; von 0,1 bis 4 Gew.-% niederschmelzendes Wachs; von 10 bis 30 Gew.-% Polyvinylacetat; von 1 bis 10 Gew.-% Emulgator; von 5 bis 20 Gew.-% Füllstoff und von 15 bis 40 Gew.-% Kaugummigrundmasse-Lösungsmittel umfaßt.

11. Verfahren nach Anspruch 10, **dadurch gekennzeichnet**, daß das niederschmelzende Wachs ein Paraffinwachs umfaßt.

12. Verfahren nach Anspruch 10 oder 11, **dadurch gekennzeichnet**, daß das Elastomer aus der Gruppe, die Butadien-Styrol-Copolymere, Polyisobutylen, Isobutylen-Isopren-Copolymer und Gemische davon umfaßt, ausgewählt wird.

13. Verfahren nach einem der Ansprüch 10 bis 12, **dadurch gekennzeichnet,** daß das Elastomer ein Gemisch von Isobutylen-Isopren-Copolymer und Polyisobutylen enthält, worin das Verhältnis des Isopren-Isobutylen-Copolymers zu polyisobutylen von 3:1 bis 1:3 auf Gewichtsbasis ist.

14. Verfahren nach einem der Ansprüche 10 bis 13, **dadurch gekennzeichnet,** daß der Emulgator Glycerinmonostearat umfaßt.

15. Verfahren nach einem der Ansprüche 10 bis 14, **dadurch gekennzeichnet**, daß das Füllmittel Calciumcarbonat umfaßt.

16. Verfahren nach einem der Ansprüche 10 bis 15, **dadurch gekennzeichnet,** daß das Gummigrundmasse-Lösungsmittel aus der Gruppe, die teilweise hydriertes Pflanzenöl, teilweise hydriertes Sojabohnenöl, Glycerinmonostearat, hydriertes Baumwollsamenöl und Gemische davon umfaßt, ausgewählt wird.

17. Verfahren nach einem der Ansprüche 10 bis 16, **dadurch gekennzeichnet,** daß das Gummigrundmasse-Lösungsmittel ein Gemisch von hydriertem Öl und Glycerinmonostearat enthält, worin das Verhältnis von hydriertem Öl zu Glycerinmonostearat von 40:1 bis 2:1 auf Gewichtsbasis ist.

**Revendications**

1. Base de gomme à mâcher, comprenant :
une résine terpénique en une quantité de 0,1 à 20 % en poids, par rapport à la base de gomme, où la résine terpénique a un point de ramollissement de 85 à 135°C ;
une ou plusieurs cires à point de fusion élevé, en une quantité de 0,1 à 10 % en poids par rapport à la base de gomme, les cires à point de fusion élevé ayant un point de fusion de 70°C ou plus ;
où la somme de la quantité de résine terpénique et de cire à point de fusion élevé présentes dans la base de gomme à mâcher est de 0,1 à 20 % en poids par rapport à la base de gomme, le rapport de la résine terpénique à la cire à point d'ébullition élevé étant de 3:1 à 1:3 en poids ;
une cire à bas point de fusion, en une quantité de 0,1 à 4 % en poids par rapport à la base de gomme, la cire à bas point de fusion ayant un point de fusion de 50°C ou moins ;

un ou plusieurs élastomères, en une quantité de 10 à 30 % en poids par rapport à la basé de gomme ;

un poly(acétate de vinyle) à faible masse moléculaire, en une quantité de 15 à 30 % en poids par rapport à la base de gomme, le poly(acétate de vinyle) ayant une masse moléculaire de 8000 à 60 000 ;

un ou plusieurs émulsifiants, en une quantité de 1 à 10 % en poids par rapport à la base de gomme ;

une ou plusieurs charges, en une quantité de 5 à 20 % en poids par rapport à la base de gomme ; et

un ou plusieurs solvants pour base de gomme à mâcher, en une quantité de 15 à 40 % en poids par rapport à la base de gomme.

2. Base de gomme à mâcher selon la revendication 1 comprenant :

une résine terpénique en une quantité de 5 à 15 % en poids par rapport à la base de gomme, la résine terpénique ayant un point de fusion de 85 à 125°C ;

une ou plusieurs cires à point de fusion élevé, en une quantité de 4 à 8 % en poids par rapport à la base de gomme, les cires à point de fusion élevé ayant un point de fusion de 70°C ou plus ;

où la somme de la quantité de résine terpénique et de la quantité de cire à point de fusion élevé présentes dans la base de gomme à mâcher est de 4 à 20 % en poids par rapport à la base de gomme, le rapport de la résine terpénique à la cire à point de fusion élevé étant de 3:1 à 1:1 en poids ;

une cire à bas point de fusion, en une quantité de 0,1 à 2 % en poids par rapport à la base de gomme, la cire à bas point de fusion ayant un point de fusion de 50°C ou moins ;

un ou plusieurs élastomères, en une quantité de 15 à 25 % en poids par rapport à la base de gomme ;

un poly(acétate de vinyle) à faible masse moléculaire, en une quantité de 20 à 25 % en poids par rapport à la base de gomme, le poly(acétate de vinyle) ayant une masse moléculaire de 8000 à 60 000 ;

un ou plusieurs émulsifiants en une quantité de 2 à 8 % en poids par rapport à la base de gomme ;

une ou plusieurs charges en une quantité de 10 à 15 % en poids par rapport à la base de gomme ;

un ou plusieurs solvants pour base de gomme à mâcher, en une quantité de 20 à 30 % en poids par rapport à la base de gomme.

3. Composition de gomme à mâcher selon la revendication 1 ou 2, caractérisée en ce que la cire à bas point de fusion comprend une cire de paraffine.

4. Composition de gomme à mâcher selon l'une quelconque des revendications précédentes, caractérisée en ce que l'élastomère est choisi dans le groupe comprenant les copolymères butadiène/styrène, le polyisobutylène, le copolymère isobutylène/isoprène, et leurs mélanges.

5. Composition de gomme à mâcher selon l'une quelconque des revendications précédentes, caractérisée en ce que l'élastomère comprend un mélange d'un copolymère isobutylène/isoprène et de polyisobutylène, le rapport du copolymère isoprène/isobutylème au polyisobutylene étant de 3:1 à 1:3 en poids.

6. Composition de gomme à mâcher selon l'une quelconque des revendications précédentes, caractérisée en ce que l'émulsifiant comprend du monostéarate de glycérol.

7. Composition de gomme à mâcher selon l'une quelconque des revendications précédentes, caractérisée en ce que la charge comprend du carbonate de calcium.

8. Composition de gomme à mâcher selon l'une quelconque des revendications précédentes, caractérisée en ce que le solvant pour base de gomme est choisi dans le groupe comprenant les huiles végétales partiellement hydrogénées, l'huile de soja partiellement hydrogénée, les monostéarates de glycérol, l'huile de graine de coton hydrogénée, et leurs mélanges.

9. Composition de gomme à mâcher selon l'une quelconque des revendications précédentes, caractérisée en ce que le solvant pour base de gomme comprend un mélange d'une huile hydrogénée et de monostéarate de glycérol, le rapport de l'huile hydrogénée au monostéarate de glycérol étant de 40:1 à 2:1 en poids.

10. Procédé de fabrication d'une base de gomme à mâcher non adhérente, comprenant les étapes consistant :

à disposer d'une résine terpénique ayant un point de ramollissement de 85 à 135°C ;

à disposer d'une ou plusieurs cires à point de fusion élevé, ayant un point de fusion de 70°C ou plus ;

à disposer d'une cire à bas point de fusion, ayant un point de fusion de 50°C ou moins ;

à disposer d'un ou plusieurs élastomères ;

à disposer d'un poly(acétate de vinyle) à faible masse moléculaire, ayant une masse moléculaire de 8000 à 60 000 ;

à disposer d'un ou plusieurs émulsifiants ;

à disposer d'une ou plusieurs charges ;

à disposer d'un ou plusieurs solvants pour base de gomme à mâcher ;

et à mélanger les constituants ci-dessus de façon que la base de gomme à mâcher non adhérente résultante comprenne de 0,1 à 20 % en poids de résine terpénique ; de 0,1 à 10 % en poids de cires à point d'ébullition élévé, de telle sorte que la quantité totale de résine terpénique et de cire à point de fusion élevé soit de 0,1 à 20 % en poids, le rapport de la résine terpénique à la cire à point de fusion élevé étant de 3:1 à 1:3 en poids ; de 0,1 à 4 % en poids d'une cire à bas point de fusion ; de 10 à 30 % en poids de polylacétate de vinyle) ; de 1 à 10 % en poids d'un émulsifiant ; de 5 à 20 % en poids de charge ; et de 15 à 40 % en poids de solvants pour base de gomme à mâcher ;

11. Procédé selon la revendication 10, caractérisé en ce que la cire à bas point de fusion comprend une cire de paraffine.

12. Procédé selon la revendication 10 ou 11, caractérisé en ce que l'élastomère est choisi dans le groupe comprenant les copolymères butadiène/styrène, le polyisobutylène, le copolymère isobutylène/isoprène et leurs mélanges.

13. Procédé selon l'une quelconque des revendications 10 à 12, caractérisé en ce que l'élastomère comprend un mélange de copolymère isobutylène/isoprène et de polyisobutylène, le rapport du copolymère isoprène/isobutylème au polyisobutylème étant de 3:1 à 1:3 en poids.

14. Procédé selon l'une quelconque des revendications 10 à 13, caractérisé en ce que l'émulsifiant comprend du monostéarate de glycérol.

15. Procédé selon l'une quelconque des revendications 10 à 14, caractérisé en ce que la charge comprend du carbonate de calcium.

16. Procédé selon l'une quelconque des revendications 10 à 15, caractérisé en ce que le solvant pour base de gomme est choisi dans le groupe comprenant les huiles végétales partiellement hydrogénées, l'huile de soja partiellement hydrogénée, le monostéarate de glycérol, l'huile de graine de coton hydrogénée et leurs mélanges.

17. Procédé selon l'une quelconque des revendications 10 à 16, caractérisé en ce que le solvant pour base de gomme comprend un mélange d'une huile hydrogénée et de monostéarate de glycérol, le rapport de l'huile hydrogénée au monostéarate de glycérol étant de 40:1 à 2:1 en poids.

## FIG-1-

SUBJECTIVE STICKINESS RATINGS
TOTAL (N=153)

REGULAR STANDARD BASE (3L)

NON-TACK/TERPENE RESIN (R) BASE BLEND

NON-TACK BASE (M)

MINUTES

## FIG-2-

SUBJECTIVE STICKINESS RATING
TOTAL N=(153)

REGULAR STANDARD BASE (3K)

NON-TACK BASE (L)

NON-TACK TERPENE RESIN BASE BLEND (J)

MINUTES

15